# EUROPEAN PATENT APPLICATION

(11) **EP 4 539 406 A1**
(43) Date of publication of application: **16.04.2025**
(21) Application number: 22951486.4
(22) Date of filing: 20.07.2022
(51) Int. Cl.: H04L 27/00

(54) **CHANNEL TRANSMISSION METHOD AND APPARATUS, TERMINAL, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); DING, Yi, Dongguan, Guangdong 523860 (CN); ZHANG, Shichang, Dongguan, Guangdong 523860 (CN); MA, Teng, Dongguan, Guangdong 523860 (CN)
(74) Representative: Penza, Giancarlo
(86) International application number: PCT/CN2022/106722
(87) International publication number: WO 2024/016208

(57) **Abstract**

A channel transmission method and apparatus, a terminal, and a network device are provided. The method includes: if a first terminal determines, according to a result of a channel access procedure, that a channel is available, the first terminal selects a target candidate starting position from N candidate starting positions of a time domain unit to perform sidelink channel transmission. The candidate starting positions are used for representing positions of a starting time domain symbol of the sidelink channel transmission in the time domain unit, N is an integer greater than 1, and the target candidate starting position is a first candidate starting position after a moment when the first terminal determines, according to the result of the channel access process, that the channel is available.

## Description

### TECHNICAL FIELD

Embodiments of the present disclosure relate to the technical field of mobile communications, in particular to a method and apparatus for channel transmission, a terminal and a network device.

### BACKGROUND

An unlicensed spectrum may be shared by various communication systems, such as a Wireless Fidelity (WiFi) communication system, a Bluetooth communication system, a Sidelink (SL) communication system, a cellular communication system. For the use of unlicensed spectrum, a communication device needs to follow a principle of Listen Before Talk (LBT). That is, before transmitting a signal on a channel of the unlicensed spectrum, the communication device firstly needs to perform channel sensing. Only when the channel sensing result indicates that the channel is idle, the communication device is able to transmit the signal. If the channel sensing result of the communication device on the channel of the unlicensed spectrum indicates that the channel is busy, the communication device is unable to transmit the signal.

A sidelink over unlicensed spectrum (SL-U) communication system is a synchronous transmission system, and a transmission resource is typically based on a time domain unit (such as a slot, a sub-slot, a time domain symbol, etc.). It should be understood that even if the LBT of a terminal in the SL-U communication system is successful, it is necessary for the terminal to wait until a starting position of the time domain unit is reached before performing data transmission. During the waiting period, there is a possibility that a device of another system (such as a WiFi device, a Bluetooth device) may preempt the channel, resulting in the communication device of the SL-U communication system being unable to perform the data transmission.

### SUMMARY

Embodiments of the present disclosure provide a method and apparatus for channel transmission, a terminal and a network device.

There is provided a method for channel transmission in an embodiment of the present disclosure, the method includes the following operations.

If a first terminal determines, based on a result of a channel access procedure, that a channel is available, the first terminal selects a target candidate starting position from N candidate starting positions in a time domain unit to perform sidelink channel transmission. A candidate starting position is used to represent a position of a starting time domain symbol in the time domain unit for the sidelink channel transmission, and N is an integer greater than 1.

The target candidate starting position is a first candidate starting position after a moment when the first terminal determines, based on the result of the channel access procedure, that the channel is available.

There is provided a method for channel transmission in an embodiment of the present disclosure, the method includes the following operations.

A network device transmits first configuration information, where the first configuration information is used to configure N candidate starting positions in a time domain unit, and N is an integer greater than 1. A candidate starting position is used to represent a position of a starting time domain symbol in the time domain unit for the sidelink channel transmission.

There is provided an apparatus for channel transmission in an embodiment of the present disclosure. The apparatus for channel transmission is applied to a terminal and includes a first transmission unit.

The first transmission unit is configured to, when a sensing result for a channel is idle, select a target candidate starting position from N candidate starting positions in a time domain unit to perform sidelink channel transmission. A candidate starting position is used to represent a position of a starting time domain symbol in the time domain unit for the sidelink channel transmission.

The first transmission unit determines that the sensing result for the channel is idle before at least one candidate starting position of the N candidate starting positions, and the target candidate starting position is a first candidate starting position of the at least one candidate starting position.

There is provided an apparatus for channel transmission in an embodiment of the present disclosure. The apparatus for channel transmission is applied to a network device, and includes a second transmission unit.

The second transmission unit is configured to transmit first configuration information, the first configuration information is used to configure N candidate starting positions in a time domain unit, and N is an integer greater than 1. A candidate starting position is used to represent a position of a starting time domain symbol in the time domain unit for the sidelink channel transmission.

There is provided a communication device in an embodiment of the present disclosure. The communication device may be the first terminal or the network device in the aforementioned solutions, and include a processor and a memory. The memory is used to store a computer program, and the processor is configured to call and execute the computer program stored in the memory to implement each of the methods for channel transmission described above.

There is provided a chip in an embodiment of the present disclosure, and the chip is configured to implement each of the methods for channel transmission described above.

Specifically, the chip includes a processor configured to call and execute a computer program from a memory, such that a device on which the chip is mounted implements each of the methods for channel transmission described above.

There is provided a computer-readable storage medium in an embodiment of the present disclosure. The computer-readable storage medium having stored thereon a computer program that, when executed by a computer, causes the computer to implement each of the methods for channel transmission described above.

There is provided a computer program product in an embodiment of the present disclosure. The computer program product has stored therein computer program instructions that, when executed by a computer, cause the computer to implement each of the methods for channel transmission described above.

There is provided a computer program in an embodiment of the present disclosure. The computer program, when executed by a computer, causes the computer to implement each of the methods for channel transmission described above.

In the embodiments of the present disclosure, the method for channel transmission is provided. If the first terminal determines, based on the result of the channel access procedure, that the channel is available, the first terminal selects the target candidate starting position from N candidate starting positions in the time domain unit to perform sidelink channel transmission. The candidate starting position is used to represent the position of the starting time domain symbol in the time domain unit for the sidelink channel transmission, and N is an integer greater than 1. The target candidate starting position is the first candidate starting position after the moment when the first terminal determines, based on the result of the channel access procedure, that the channel is available. That is, the time domain unit may include multiple candidate starting positions, and after the moment when the first terminal determines that the channel is available, the first terminal may select the closest candidate starting position in the time domain to perform the sidelink channel transmission. In such way, after missing the starting position of the time domain unit, the terminal does not have to wait for the starting position of the next time domain unit, but selects the closest candidate starting position to start transmission after LBT is successful. The probability of accessing the channel and the efficiency of sidelink channel transmission can be improved.

### BRIEF DESCRIPTION OF THE DRAWINGS

The accompanying drawings constituting a part of the present disclosure are intended to provide a further understanding of the present disclosure. The schematic embodiments of the present disclosure and description thereof are intended to be illustrative of the present disclosure, and do not constitute an undue limitation of the present disclosure. In the accompanying drawings:
FIG. 1A is a schematic diagram of an architecture of a sidelink communication system within a network coverage provided in an embodiment of the present disclosure.
FIG. 1B is a schematic diagram of an architecture of a sidelink communication system partially within a network coverage provided in an embodiment of the present disclosure.
FIG. 1C is a schematic diagram of an architecture of a sidelink communication system outside a network coverage provided in an embodiment of the present disclosure.
FIG. 2A is a first schematic diagram of a slot structure of a sidelink communication system provided in an embodiment of the present disclosure.
FIG. 2B is a second schematic diagram of a slot structure of a sidelink communication system provided in an embodiment of the present disclosure.
FIG. 3 is a third schematic diagram of a slot structure of a sidelink communication system provided in an embodiment of the present disclosure.
FIG. 4 is a schematic diagram of sidelink time domain resource scheduling provided in an embodiment of the present disclosure.
FIG. 5 is a first schematic flowchart of a method for channel transmission provided in an embodiment of the present disclosure.
FIG. 6A is a fourth schematic diagram of a slot structure of a sidelink communication system provided in an embodiment of the present disclosure.
FIG. 6B is a fifth schematic diagram of a slot structure of a sidelink communication system provided in an embodiment of the present disclosure.
FIG. 7 is a second schematic flowchart of a method for channel transmission provided in an embodiment of the present disclosure.
FIG. 8 is a sixth schematic diagram of a slot structure of a sidelink communication system provided in an embodiment of the present disclosure.
FIG. 9 is a seventh schematic diagram of a slot structure of a sidelink communication system provided in an embodiment of the present disclosure.
FIG. 10 is a schematic structural diagram of an apparatus for channel transmission 1000 provided in an embodiment of the present disclosure.
FIG. 11 is a schematic structural diagram of an apparatus for channel transmission 1100 provided in an embodiment of the present disclosure.
FIG. 12 is a schematic structural diagram of a communication device provided in an embodiment of the present disclosure.
FIG. 13 is a schematic structural diagram of a chip in an embodiment of the present disclosure.
FIG. 14 is a schematic block diagram of a communication system provided in an embodiment of the present disclosure.

### DETAILED DESCRIPTION

The technical solutions in the embodiments of the present disclosure will be described below with reference to the accompanying drawings in the embodiments of the present disclosure. It will be apparent that the described embodiments herein are only part of but not all of the embodiments in the present disclosure. Based on the embodiments in the present disclosure, all other embodiments obtained by those of ordinary skilled in the art without making any creative effort fall within the scope of protection of the present disclosure.

Based on the situations of network coverage where both terminals of communication are located, sidelink communication may be classified into sidelink communication within the network coverage, sidelink communication partially within the network coverage, and sidelink communication outside the network coverage.

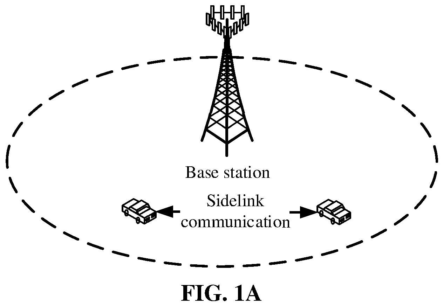

For the sidelink communication within the network coverage, referring to a schematic diagram of an architecture of a sidelink communication system within a network coverage shown in FIG. 1A, all terminals performing the sidelink communication are within the coverage of a base station. As such, all of the terminals may perform the sidelink communication based on the same sidelink configuration by receiving a configuration signaling from the base station.

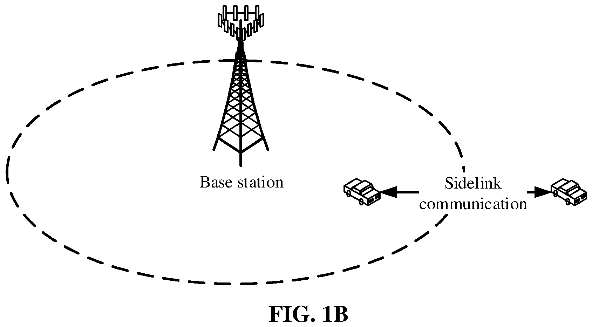

For the sidelink communication partially within the network coverage, referring to a schematic diagram of an architecture of a sidelink communication system partially within a network coverage shown in FIG. 1B, a part of the terminals performing the sidelink communication is located within the coverage of the base station. The part of the terminals may receive the configuration signaling from the base station, and perform the sidelink communication based on the configuration from the base station. However, the terminal(s) located outside the network coverage cannot receive the configuration signaling from the base station. In such case, the terminals outside the network coverage determine the sidelink configuration based on pre-configuration information and information carried in a Physical Sidelink Broadcast Channel (PSBCH) transmitted by the terminal(s) located within the network coverage, to perform the sidelink communication.

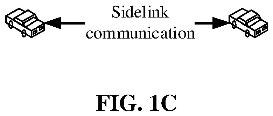

For the sidelink communication outside the network coverage, referring to a schematic diagram of an architecture of a sidelink communication system outside a network coverage shown in FIG. 1C, all terminals performing the sidelink communication are located outside the network coverage, and each of the terminals determines the sidelink configuration based on the pre-configuration information, to perform the sidelink communication.

The Sidelink (SL) transmission technology is used in sidelink communication, which is direct communication from one terminal to another. Different from a traditional cellular system where communication data is received or transmitted through the base station, the sidelink transmission technology has higher spectrum efficiency and lower transmission delay. The 3rd Generation Partnership Project (3GPP) defines two sidelink transmission modes: a first mode and a second mode.

In the first mode, the transmission resource(s) for the terminal is allocated by the base station, and the terminal transmits data on a sidelink based on the resource(s) allocated by the base station. The base station may dynamically allocate resource(s) for the sidelink transmission for the terminal, and may also allocate resource(s) for semi-persistent transmission for the terminal. As illustrated in FIG. 1A, the terminal is located within the coverage of the base station, and the base station may allocate transmission resource(s) used for the sidelink channel transmission for the terminal.

In the second mode, the terminal selects a resource from a resource pool for data transmission. In some embodiments, as illustrated in FIGS. 1B and 1C, when the terminal is located outside the coverage of the base station, the terminal may autonomously select the transmission resource in a pre-configured resource pool, to perform the sidelink channel transmission. In other embodiments, as illustrated in FIG. 1A, the terminal may autonomously select the transmission resource in a resource pool configured by the base station, to perform the sidelink channel transmission.

In New Radio (NR) sidelink communication (such as Vehicle to Everything (V2X)), automatic driving needs to be supported, so higher requirements are put forward for data interactions between vehicles, such as higher throughput, lower delay, higher reliability, larger coverage, more flexible resource allocation, etc.

In some embodiments, a slot structure of the NR sidelink communication system may include two types: a slot structure in which a Physical Sidelink Feedback Channel (PSFCH) is not included in the slot, and a slot structure in which the PSFCH is included in the slot.

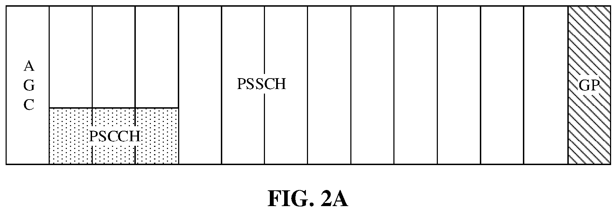

Referring to the slot structure in which the PSFCH is not included in the slot as illustrated in FIG. 2A, a Physical Sidelink Control Channel (PSCCH) in the NR sidelink communication system may start from a second time domain symbol of a slot and occupy 2 or 3 time domain symbols in time domain. The PSCCH may occupy {10, 12 15, 20, 25} physical resource blocks (PRB) in frequency domain. In order to reduce the complexity of blind detection for the PSCCH by the terminal, only one number of PSCCH symbols and one number of PRBs are allowed to be configured in one resource pool. In addition, since a sub-channel is the minimum granularity of resource allocation of a Physical Sidelink Shared Channel (PSSCH) in the NR sidelink communication, the number of PRBs occupied by the PSCCH must be less than or equal to the number of PRBs included in one sub-channel in the resource pool, so as to avoid additional restrictions on the selection or allocation of PSSCH resources.

The PSSCH also starts from the second time domain symbol of the slot in the time domain, the last time domain symbol in the slot is a Guard Period (GP) symbol, and the PSSCH is mapped into the remaining time domain symbols. The first time domain symbol in the time slot is a repetition of the second time domain symbol. Typically, the first time domain symbol is used by the receiving terminal as an Automatic Gain Control (AGC) symbol, and the data on the first time domain symbol is not used for data demodulation.

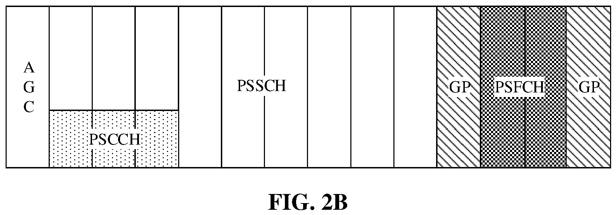

Referring to the slot structure in which the PSFCH is included in the slot as illustrated in FIG. 2B, a penultimate time domain symbol and an antepenultimate time domain symbol in the slot are used for channel transmission of PSFCH, and a time domain symbol preceding the channel of PSFCH is used as the GP symbol.

The NR sidelink communication system supports that some time domain symbols in a slot are used for sidelink channel transmission, that is, some symbols in the slot are used for the sidelink channel transmission. The NR sidelink communication system may configure a starting point and a length of the time domain symbols in the slot for sidelink channel transmission based on a position of a starting symbol (*sl-StartSymbol*) and the number of symbols (*sl-LengthSymbols*). The last time domain symbol of the time domain symbols available for the sidelink channel transmission is used as the GP, and only the remaining time domain symbols may be used by the PSSCH and PSCCH.

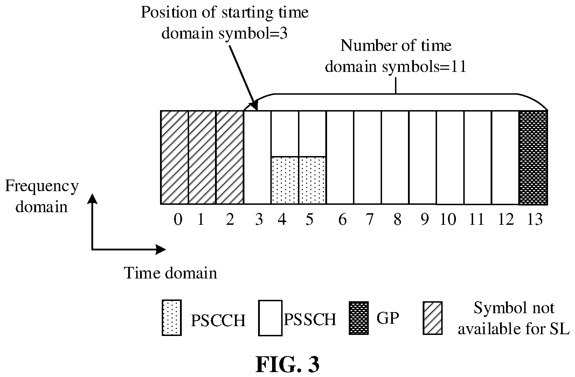

For example, referring to a schematic diagram of a slot structure of an NR sidelink communication system as illustrated in FIG. 3, the network is configures an index value of the starting time domain symbol as 3, and configures the number of symbols as 11. That is, in the slot, 11 time domain symbols starting from the symbol with the index value of 3 may be used for the sidelink channel transmission. The time domain symbol with the time domain symbol index of 3 is typically used as the AGC symbol, and the symbol with the index of 13 is used as the GP, The remaining time domain symbols starting from the time domain symbol with the index of 3 to the time domain symbol with the index of 13 may be used for the PSCCH transmission and PSSCH transmission, where the PSCCH occupies 2 time domain symbols.

In practical applications, in order to reduce the overhead of the PSFCH, one slot of every M slots is defined to include PSFCH transmission resource(s). That is, a period of the sidelink feedback resource is M slots, where M = 1, 2, 4, and the parameter M is preconfigured, or configured by the network.

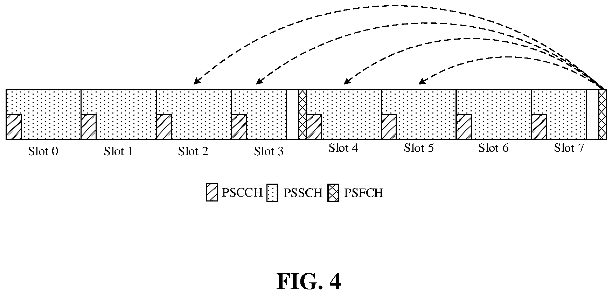

For example, referring to a schematic diagram of a sidelink time domain resource scheduling as illustrated in FIG. 4, feedback information for PSSCHs transmitted in slots 2, 3, 4 and 5 is transmitted in slot 7, so that the slots {2, 3, 4, 5} may be regarded as a slot set, and the PSFCHs corresponding to the PSSCHs transmitted in the slot set is transmitted in the same slot. The minimum time interval between the PSSCH and the PSFCH corresponding to the PSSCH may be configured by resource pool configuration information. As illustrated in FIG. 4, the minimum time interval between the PSSCH and the PSFCH corresponding to the PSSCH is 2 slots.

Unlicensed spectrum is the spectrum that can be used for communications between radio devices divided by countries and regions. The unlicensed spectrum is generally considered to be a shared spectrum. That is, as long as communication devices in different communication systems meet the regulatory requirements set by the countries and regions on the unlicensed spectrum, the unlicensed spectrum can be used, and there is no need to apply for a dedicated spectrum license.

Various communication technologies share the unlicensed spectrum, such as WiFi communication system, Bluetooth communication system, SL communication system, cellular communication system, etc. The WiFi system and the Bluetooth system are asynchronous transmission systems. The communication device performs LBT before performing transmission. If the LBT is successful, the communication device may access the channel and transmit data. The SL-U system is a synchronous system, and the transmission resources are all based on the time domain unit. Even if the LBT performed by a terminal is successful, the terminal needs to wait until the starting position of the slot to transmit data. During this period, there is a possibility that a device of another system (such as a WiFi device) may preempt the channel, resulting in the SL-U terminal being unable to transmit data. Therefore, how to improve the success rate of the SL-U terminal accessing the channel is a problem that needs to be solved.

Based on this, there is provided a method for channel transmission in an embodiment of the present disclosure. If a first terminal determines that a channel is available based on a result of a channel access procedure, the first terminal selects a target candidate starting position from N candidate starting positions in a time domain unit to perform sidelink channel transmission. A candidate starting position is used to represent a position of a starting time domain symbol in the time domain unit for the sidelink channel transmission, and N is an integer greater than 1. The target candidate starting position is a first candidate starting position after a moment when the first terminal determines, based on the result of the channel access procedure, that the channel is available. That is, the time domain unit may include multiple candidate starting positions, and after the moment when the first terminal determines that the channel is available, the first terminal may select the closest candidate transmission position in the time domain to perform the sidelink channel transmission. In such way, after missing the starting position of the time domain unit, the terminal does not have to wait for the starting position of the next time domain unit, but selects the closest candidate starting position to start transmission after LBT is successful. The probability of accessing the channel and the efficiency of sidelink channel transmission can be improved.

It should be noted that the terms "system" and "network" are generally used interchangeably herein. The term "and/or" herein is merely an association relationship that describes associated objects, and indicates that there may be three relationships. For example, A and/or B may indicate three situations: A exists alone, A and B exist simultaneously, and B exists alone. In addition, the character "/" herein generally indicates that the anterior and posterior associated objects are in a kind of "or" relationship. It should also be understood that "indicate/indication" mentioned in the embodiments of the present disclosure may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B. It should also be understood that "correspond/correspondence" mentioned in the embodiment of the present disclosure may represent that there is a direct or indirect correspondence between the two objects; or, may represent that there is an association relationship between two objects; or, may be a relationship such as indicating and being indicated, configuring and being configured, etc. It should also be understood that "predefined/predefinition" or "predefined rule" mentioned in the embodiments of the present disclosure may be implemented by storing corresponding codes, tables, or other means which may be used to indicate relevant information in advance within a device (including, for example, a terminal device and a network device), the specific implementation thereof are not be limited in the present disclosure. For example, "predefined" may refer to "defined in a protocol". It should also be understood that, in the embodiment of the present disclosure, the "protocol" may refer to a standard protocol in the field of communications, and for example, it may include an LTE protocol, an NR protocol, and relevant protocols applied to future communication systems, which are not limited in the present disclosure.

For convenience of understanding of the technical solutions in the embodiments of the present disclosure, the technical solutions in the present disclosure are described in detail by way of specific embodiments below. The above related technologies, as an alternative, can be arbitrarily combined with the technical solutions in the embodiments of the present disclosure, all of which belong to the scope of protection of the embodiments of the present disclosure. The embodiments of the present disclosure include at least some of the following contents.

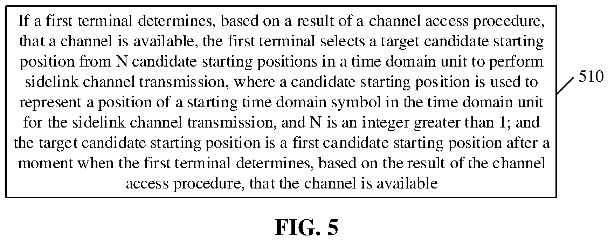

FIG. 5 is a schematic flowchart of a method for channel transmission provided in an embodiment of the present disclosure. As illustrated in FIG. 5, the method includes the following operations.

At operation 510, if a first terminal determines, based on a result of a channel access procedure, that a channel is available, the first terminal selects a target candidate starting position from N candidate starting positions in a time domain unit to perform sidelink channel transmission.

Herein, a candidate starting position is used to represent a position of a starting time domain symbol in the time domain unit for the sidelink channel transmission, and N is an integer greater than 1. The target candidate starting position is a first candidate starting position after a moment when the first terminal determines, based on the result of the channel access procedure, that the channel is available.

In an embodiment of the present disclosure, the first terminal may operate in an unlicensed spectrum, and for example, the first terminal may be an SL-U terminal. In such scenario, multiple candidate starting positions may be set within one time domain unit on a time domain resource. The candidate starting position refers to the starting position for sidelink channel transmission, which may specifically represent the position of the first time domain symbol in the time unit for the sidelink channel transmission.

It should be understood that the time domain symbol is the minimum unit of time in the time domain. The time domain symbol may be an Orthogonal Frequency Division Multiplexing (OFDM) symbol or a Single Carrier Frequency Division Multiplexing (SC-FDM) symbol, which is not limited in the embodiments of the present disclosure.

A time unit may be composed of multiple time domain symbols. For example, the time unit may be a set of slots, sub-slots, or multiple time domain symbols, which is not limited in the embodiments of the present disclosure. For a slot with a normal Cyclic Prefix (CP), one slot may include 14 time domain symbols. For a slot with an extended CP, one slot may include 12 time domain symbols.

It should be noted that the N candidate starting positions in the time domain unit may be determined based on pre-definition in a protocol, pre-configuration information or network configuration information, which is not limited in the embodiments of the present disclosure.

It should be noted that the channel access procedure is also known as an LBT procedure, that is, the procedure in which the terminal determines whether the channel is available based on the sensing result.

It can be understood that, in the embodiments of the present disclosure, before the transmission on sidelink channel, the first terminal may perform the LBT procedure to determine whether the channel is available. When the first terminal determines, based on the result of the channel access procedure, that the channel on the current time unit is available, the target candidate starting position may be selected from the N candidate starting positions in the time unit as the starting position of the sidelink channel.

Specifically, the moment when the first terminal determines, based on the result of the channel access procedure, that the channel is available is referred to as a first moment. The first terminal may select a candidate starting position after the first moment and whose time domain position is closest to the first moment as the target candidate starting position. That is, the first terminal may set the first candidate starting position located after the first moment in the time domain unit as the target candidate starting position.

In other words, if the first terminal performs LBT successfully before a certain candidate starting position of the N candidate starting positions that are set, the first terminal may access the channel at the certain candidate starting position to perform the sidelink channel transmission. If the first terminal performs LBT successfully after the candidate slot position, the first terminal may select a candidate starting position which is closest to the candidate starting position where the LBT was successful, to access the channel and further perform the sidelink channel transmission.

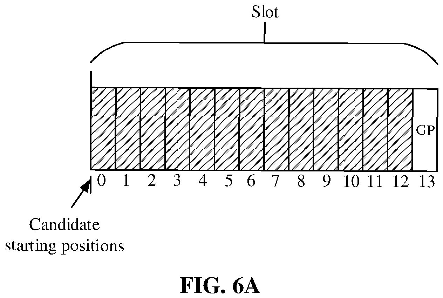

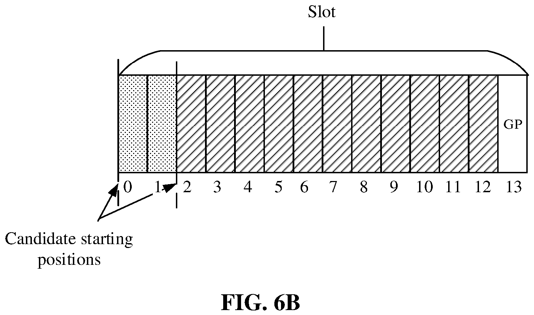

Exemplarily, taking a time domain unit to be a slot for illustration, for the slot with the normal CP, with reference to the schematic diagram of the slot structure shown in FIGS. 6A and 6B, each slot includes 14 time domain symbols with index values from 0 to 13. As shown in FIG. 6A, only one candidate starting position is set in the slot, and the candidate starting position is located at the first time domain symbol of the slot, that is, the time domain symbol is with an index value of 0. As shown in FIG. 6B, two candidate starting positions are set in the slot, and the two candidate starting positions are respectively located in the first time domain symbol and the third time domain symbol, that is, the time domain symbols are respectively with the index value of 0 and the index value of 2.

When operating in the unlicensed spectrum, the first terminal may perform the LBT before a slot corresponding to a transmission resource. If the first terminal fails to perform the LBT before the slot starting position (i.e., the first terminal determines that the channel is unavailable based on the result of the channel access procedure, or the first terminal fails to complete the LBT procedure), the first terminal continues to perform the LBT. If the first terminal performs the LBT successfully in a middle position of the slot (the channel is determined to be available based on the result of the channel access procedure), for the scenario as illustrated in FIG. 6A, the first terminal may only wait until a next slot before performing the sidelink channel transmission. However, for the scenario in which two candidate starting positions are set in the slot as illustrated in FIG. 6B, if the first terminal performs the LBT successfully before the third time domain symbol (i.e., the time domain symbol with the index value of 2) and further determines that the channel is available, the first terminal may start the transmission on the sidelink channel at the third time domain symbol. Compared with the scenario as illustrated in FIG. 6A, a manner configured with multiple candidate starting positions is provided in the embodiments of the present disclosure corresponding to FIG. 6B. Thus, the probability of accessing the channel can be improved.

In summary, in the method for channel transmission provided in the embodiments of the present disclosure, multiple candidate starting positions may be set in the time domain unit. After the moment when the first terminal determines that the channel is available, the first terminal may select the closest candidate starting position in the time domain to perform the sidelink channel transmission. In such way, when missing the starting position of the time domain unit, it is unnecessary for the terminal to wait for the starting position of the next time domain unit, but to select the closest candidate starting position to start the transmission after the LBT is successful. Thus, the probability of accessing the channel and the efficiency of the sidelink channel transmission can be improved.

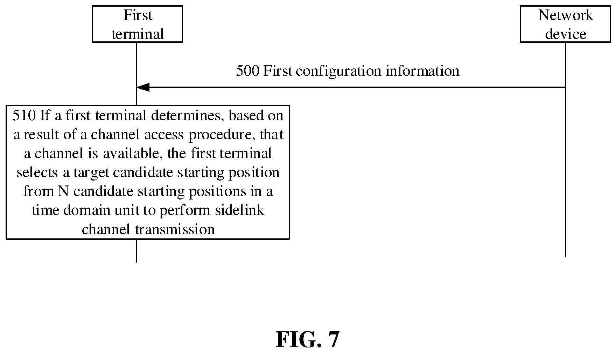

In an embodiment, as shown in FIG. 7, in one embodiment of the present disclosure, before selecting the target candidate starting position from the N candidate starting positions in the time domain unit to perform the sidelink channel transmission at operation 510, the first terminal may further perform the following operation.

At operation 500, the first terminal receives first configuration information. The first configuration information is used to configure the N candidate starting positions in the time domain unit.

In an embodiment, the first configuration information may be configured by the network device, that is, the first configuration information may be transmitted from the network device to the first terminal. For example, the first configuration information may be configured by a base station.

In an embodiment, based on an actual network state, the network device may configure the candidate starting positions in the time unit on the unlicensed spectrum. For example, when the network state of the unlicensed spectrum is good, the network device may configure less candidate starting positions in the time unit; and when the network state of the unlicensed spectrum is poor, the network device may configure more candidate starting positions in the time unit. The network state may be indicated to be a degree of channel congestion, channel busyness, etc. By configuring the N starting positions in the time domain unit according to the first configuration information, the flexibility of the configuration can be improved.

In an embodiment, the first configuration information indicates the N candidate starting positions in the time domain unit in several manners, and two of them are described below.

In manner 1: the first configuration information includes N index indication values, and the N index indication values are in one-to-one correspondence with the N candidate starting positions. The N index indication values respectively indicate index values of time domain symbols corresponding to the N candidate starting positions in the time domain unit.

That is, the first configuration information may indicate time domain symbol indexes of the N candidate starting positions in the time domain unit.

For example, as shown in FIG. 6B, the first configuration information may indicate two candidate starting positions, and the symbol indexes corresponding to the two candidate starting positions are {0, 2}, respectively. That is, the two candidate starting positions configured by the first configuration information are located in the first time domain symbol and the third time domain symbol in the slot, respectively.

In manner 2: the first configuration information includes first indication information, and the number of bits occupied by the first indication information is the same as the number of time domain symbols included in the time domain unit. Herein, values of N bits in the first indication information are a first value, and positions of the N bits in the first indication information are respectively used to indicate positions of time domain symbols corresponding to the N candidate starting positions in the time domain unit.

It can be understood that the first indication information is a bitmap with a length equal to the number of the time domain symbols included in the time unit. One bit of the first indication information corresponds to one time domain symbol in the time unit. That is, the bits of the first indication information are in one-to-one correspondence with the time domain symbols in the time unit. For example, the first bit of the first indication information corresponds to the first time domain symbol in the time unit, the second bit of the first indication information corresponds to the second time domain symbol in the time unit, and the like.

In the embodiments of the present disclosure, the N candidate starting positions may be indicated by setting the values of N bits in the first indication information to be the first value and setting values of the remaining bits to be a second value. In an embodiment, the first value is 1 and the second value is 0; or, the first value is 0 and the second value is 1, which is not limited in the embodiments of the present disclosure.

For example, if four candidate starting positions are included in the time unit, the first indication information may be 1010 1100 0000 00. The sequence from left to right corresponds to 14 time domain symbols in the time unit, respectively. The bit with the value of 1 represents that the symbol corresponding to the bit is the candidate starting position. The 1st/3rd/5th/6th bit with the value of 1 represents that the candidate starting position is the time domain symbol with the index value of 0/2/4/5.

In some implementations, if the index values of the symbols corresponding to the N candidate starting positions set in the time domain unit are all less than an index k, the number of bits occupied by the bitmap included in the first indication information may be determined based on the value of k. For example, the number of bits occupied by the bitmap is equal to k. Herein, each of the bits in the bitmap corresponds to a respective one of k indexes with index values (starting from 0) less than k in the time domain unit, in one-to-one correspondence.

For example, one slot includes 14 time domain symbols with the indexes from 0 to 13. The indexes of the symbols at the candidate starting positions in the slot are less than the index 7 (i.e., k = 7). That is, the indexes of the symbols at the candidate starting positions range from 0 to 6, thus, the length of the bitmap is 7, where each of the bits corresponds to the respective one of the symbols with the indexes from 0 to 6, in one-to-one correspondence. If two candidate starting positions are included in the slot, the first indication information may be 1010000. The sequence from left to right corresponds to the time domain symbols 0 to 6 in the slot, respectively. The bit with the value of 1 represents that the symbol corresponding to the bit is the candidate starting position. The 1st/3rd bit with the value of 1 represents that the candidate starting position is the time domain symbol with the index value of 0/2.

In an embodiment, the first terminal may determines the value of k based on pre-definition in a protocol, pre-configuration information or network configuration information.

In an embodiment, the first configuration information may be configured by a dedicated signaling.

In an embodiment, the first configuration information may be carried through sidelink Bandwidth Part (BWP) configuration information and/or resource pool configuration information.

It can be understood that while configuring at least one of the sidelink BWP or the resource pool for the first terminal, the network device may configure the N candidate starting positions in the time domain unit for the first terminal at the same time. In such way, signaling overhead can be reduced.

In an embodiment, the first configuration information may include first sub-configuration information and second sub-configuration information.

The first sub-configuration information is used to indicate the first candidate starting position of the N candidate starting positions.

The second sub-configuration information is used to indicate other N-1 candidate starting positions of the N candidate starting positions.

It should be understood that the network device currently configures only one candidate starting position for the time domain unit. In order to be compatible with the current configuration, the network device may configure N candidate starting positions separately. Specifically, the first terminal may acquire the first candidate starting position of the N candidate starting positions based on the first sub-configuration information, and further acquire the remaining N-1 candidate starting positions of the N candidate starting positions based on the second sub-configuration information.

The first candidate starting position may be one of the N candidate starting positions. The first candidate starting position may also be one candidate starting position designated in the N candidate starting positions. For example, the first candidate starting position may be the foremost candidate starting position in the time domain of the N candidate starting positions, that is, the first candidate starting position of the N candidate starting positions, which is not limited in the embodiments of the present disclosure.

In an embodiment, the first sub-configuration information may be carried through the sidelink BWP configuration information, and the second sub-configuration information may be carried through the sidelink BWP configuration information or the resource pool configuration information.

It should be understood that the network device currently configures the candidate starting position for the time domain unit through the sidelink BWP configuration information. In the embodiments of the present disclosure, in order to be compatible with the current configuration, the network device may configure the first candidate starting position of the N candidate starting positions through the BWP configuration information. The remaining N-1 candidate starting positions may be configured through the BWP configuration information or the resource pool configuration information, which is not limited in the embodiments of the present disclosure.

For example, the first sub-configuration information is included in the sidelink BWP configuration information. The first sub-configuration information may be a parameter *sl-StartSymbol* (sidelink starting symbol), which is used to indicate the first candidate starting position. The second sub-configuration information is included in the resource pool configuration information or the sidelink BWP configuration information. The second sub-configuration information may be a parameter *sl-AdditionalStartSymbol* (sidelink supplementary starting symbol), which is used to indicate the remaining N-1 candidate transmission starting positions.

It should be noted that, in a case that the first configuration information is divided into the first sub-configuration information and the second sub-configuration information to configure the N candidate starting positions, the first candidate starting position may be configured by the first sub-configuration information according to the index value, and the remaining N-1 candidate starting positions may be configured by the second sub-configuration information according to the index value or the bitmap.

In summary, the N candidate starting positions are configured by the first sub-configuration information and the second sub-configuration information, which can be compatible with the existing configuration and further improve the configuration efficiency.

In an embodiment, in the method for sidelink channel transmission provided in the embodiments of the present disclosure, the first terminal may further perform the following operation: the first terminal acquires second configuration information. The second configuration information is used to configure at least one of:
a first number, which is used to determine the maximum number of time domain symbols in the time domain unit available for the sidelink channel transmission; or
a location of time domain symbols used for the sidelink channel transmission corresponding to each candidate starting position of the N candidate starting positions.

It should be understood that since each candidate starting position is different, the location of time domain symbols available for the sidelink channel transmission corresponding to each candidate starting position is also different.

In the embodiments of the present disclosure, the first terminal may determine, based on the second configuration information, the first number and/or the location of time domain symbols available for the sidelink channel transmission corresponding to each candidate starting position. The first number may be used by the first terminal to determine the location of time domain symbols available for the sidelink channel transmission corresponding to each candidate starting position.

For example, the second configuration information may include a parameter *sl-LengthSymbols* (i.e., a length of sidelink symbols), which is used to indicate the maximum number of time domain symbols available for the sidelink channel transmission. In addition, the second configuration information may include N pieces of indication information, and each of the N pieces of indication information is used to indicate a respective one of ending positions, which are in one-to-one correspondence with the N candidate starting positions. The location of time domain symbols available for the sidelink channel transmission corresponding to each candidate starting position is indicated by the N candidate starting positions and the N ending positions.

In the embodiments of the present disclosure, in a case that the first number is configured by the first configuration information, the first terminal may determine, based on the first number, the location of time domain symbols available for the sidelink channel transmission corresponding to each candidate starting position.

In an embodiment, in a case that the second configuration information is used to configure the first number, the location of the time domain symbols used for the sidelink channel transmission corresponding to the each candidate starting position of the N candidate starting positions is determined based on the first candidate starting position of the N candidate starting positions and the first number.

Herein, the first candidate starting position may be the foremost candidate starting position in the time domain of the N candidate starting positions.

In an embodiment, the location of the time domain symbols used for the sidelink channel transmission corresponding to the each candidate starting position may start from the each candidate starting position and end at a target position. The target position may be determined based on the first candidate starting position of the N candidate starting positions and the first number.

In the embodiments of the present disclosure, the location of time domain symbols available for the sidelink channel transmission corresponding to the first candidate starting position may be the first number of consecutive time domain symbols, which starts from the time domain symbol corresponding to the first candidate starting position.

The target position may be an ending symbol of the location of the time domain symbols available for the sidelink channel transmission corresponding to the first candidate starting position. The location of the time domain symbols used for the sidelink channel transmission corresponding to each candidate starting position starts from the current candidate starting position and ends at the ending symbol.

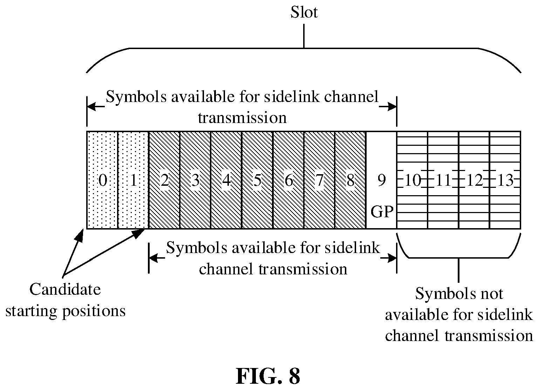

For example, as shown in FIG. 8, the first terminal determines, according to the first configuration information, that two candidate starting positions are included in one time domain unit, which are located at the first time domain symbol and the third time domain symbol, respectively. Moreover, the first terminal determines, according to the second configuration information, that the first number is 10. If the sidelink channel transmission starts at the first candidate starting position (i.e., starts from the first time domain symbol), the time domain symbols available for the sidelink channel transmission may be from the time domain symbol 0 to the time domain symbol 9. If the sidelink channel transmission starts at the second candidate starting position (i.e., starts from the third time domain symbol), the time domain symbols available for the sidelink channel transmission may be from the time domain symbol 3 to the time domain symbol 9. Here, the time domain symbol 9 is the target position described above.

It should be noted that, in the time domain symbols available for the sidelink channel transmission, the last symbol is typically used as a GP symbol. That is, the time domain symbols available for the sidelink channel transmission include a time domain symbol corresponding to the GP. For example, the time domain symbol 9 shown in FIG. 8 is the GP symbol.

In an embodiment, the second configuration information may be configuration information pre-defined in a protocol, pre-configuration information, or network configuration information, which is not limited in the embodiment of the present disclosure.

In an embodiment, the second configuration information may be network configuration information. Specifically, the first terminal may receive the second configuration information from the network device.

In an embodiment, the second sub-configuration information may be carried through the sidelink BWP configuration information or resource pool configuration information. For example, the second configuration information may be carried, together with the first configuration information, through the sidelink BWP configuration information.

In an embodiment, before the operation 510, the first terminal may receive the second configuration information from the network device, and further determine, based on the second configuration information, the location of the time domain symbols corresponding to the each candidate starting position available for the sidelink channel transmission.

In an embodiment of the present disclosure, the number of time domain symbols used for the sidelink channel transmission corresponding to each candidate starting position of the N candidate starting positions is greater than or equal to a first threshold value.

Since the location of the time domain symbols corresponding to each starting position available for the sidelink channel transmission is different, the number of the time domain symbols corresponding to each starting position available for the sidelink channel transmission is also different. In order to ensure that different candidate starting positions have sufficient resources for data transmission, the number of time domain symbols used for the sidelink channel transmission corresponding to each candidate starting position of the N candidate starting positions needs to be greater than or equal to the first threshold value.

It should be noted that, for each candidate starting position, there is a sequence in the time domain. By ensuring that the number of the time domain symbols used for the sidelink channel transmission corresponding to the last candidate starting position of the N candidate starting positions is greater than or equal to the first threshold value, it is ensured that the number of the time domain symbols used for the sidelink channel transmission corresponding to each candidate starting position of the N candidate starting positions is greater than or equal to the first threshold value.

In the embodiments of the present disclosure, parameters in the first configuration information and the second configuration information may be set by the network device, so that the number of the time domain symbols used for the sidelink channel transmission corresponding to each candidate starting position of the N candidate starting positions is greater than or equal to the first threshold value.

It should be noted that the number of the time domain symbols used for the sidelink channel transmission corresponding to each candidate starting position includes the time domain symbol corresponding to the GP.

For example, in a case that the time domain symbols used for the sidelink channel transmission corresponding to each candidate starting position include the time domain symbol corresponding to the GP, as shown in FIG. 8, if the first threshold value is 7 and the maximum number of the time domain symbols available for the sidelink channel transmission is 10, the last candidate starting position cannot be the time domain symbol 4 or the time domain symbol after the time domain symbol 4. Otherwise, the number of symbols available for the sidelink channel transmission determined from the last candidate starting position is less than the first threshold value 7. As such, sufficient resources cannot be guaranteed for the data transmission.

In an embodiment, the first threshold value may be determined based on pre-definition in a protocol, pre-configuration information or network configuration information, which is not limited in the embodiment of the present disclosure.

It should be noted that, in some implementations, if the time domain symbol corresponding to the GP is not included in the time domain symbols used for the sidelink channel transmission corresponding to each candidate starting position, the number of the time domain symbols used for the sidelink channel transmission corresponding to each candidate starting position is greater than or equal to a third threshold value. There is a corresponding relationship between the third threshold value and the first threshold value, e.g., the third threshold value is equal to the first threshold value minus 1.

In the embodiments of the present disclosure, the time domain symbols used for the sidelink channel transmission corresponding to each candidate starting position including the time domain symbol corresponding to the GP are taken as an example.

In one embodiment of the present disclosure, the method for channel transmission provided in the embodiments of the present disclosure may further include the following operation.

For a time domain unit including a PSFCH, if the number of time domain symbols used for a transmission of a PSSCH corresponding to the first candidate starting position is less than a second threshold value, the first candidate starting position is deleted from the N candidate starting positions corresponding to the time domain unit including the PSFCH. The first candidate starting position is one of the N candidate starting positions.

It should be understood that, as shown in FIG. 2B, for a time domain unit including a PSFCH transmission resource, the time domain symbols used for the transmission of the PSSCH and the time domain symbols used for the transmission of the PSFCH may be included in the time domain unit. For a certain candidate starting position, such as the first candidate starting position, if the number of symbols (including the GP symbol) available for the transmission of the PSSCH determined from the first candidate starting position is less than the second threshold value, the candidate starting position is not applicable to the time domain unit. That is, the first terminal cannot perform the sidelink channel transmission starting at the first candidate starting position. At this time, the first terminal may delete the first candidate starting position from the N candidate starting positions corresponding to the time domain unit. In such way, sufficient PSSCH resources can be guaranteed for performing the sidelink data transmission.

It should be noted that the GP symbol is included in the symbols used for the transmission of the PSSCH.

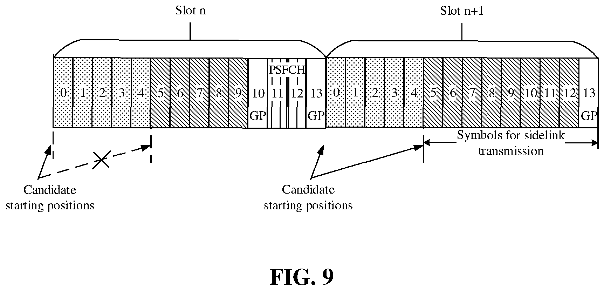

For example, taking the time domain unit to be a slot for illustration, as shown in FIG. 9, each slot may be configured with two candidate starting positions located at the symbol 0 and the symbol 5, respectively. The maximum number (the first number) of the time domain symbols available for the sidelink channel transmission may be configured to be 13, and the second threshold value may be 7. Herein, the slot n includes the PSFCH resource, and the slot n+1 does not include the PSFCH resource. For the slot n, if the symbol 0 is used as the starting position and the number of symbols available for the PSSCH is 11 (greater than the second threshold value of 7), the symbol 0 may be used as the candidate starting position. If the symbol 5 is used as the starting position and the number of symbols available for the PSSCH transmission is 6 (less than the second threshold value of 7), the symbol 5 in the slot n cannot be used as the candidate starting position, because the symbols available for the PSSCH transmission include the GP symbol.

In an embodiment, the second threshold value is determined based on pre-definition in a protocol, pre-configuration information or network configuration information, which is not limited in the embodiment of the present disclosure.

It should be noted that, in some implementations, in a case that the time domain symbols used for the transmission of the PSSCH corresponding to each candidate starting position do not include the time domain symbol corresponding to the GP, if the number of time domain symbols used for the transmission of the PSSCH corresponding to the first candidate starting position is less than a fourth threshold value, the first candidate starting position is deleted from the N candidate starting positions corresponding to the time domain unit including the PSFCH. Herein, there is a corresponding relationship between the fourth threshold value and the second threshold value, e.g., the fourth threshold value is equal to the second threshold value minus 1.

In the embodiments of the present disclosure, the time domain symbols used for the transmission of the PSSCH corresponding to each candidate starting position including the time domain symbol corresponding to the GP are taken as an example.

In one embodiment of the present disclosure, the method for channel transmission provided in the embodiments of the present disclosure may further include the following operation.

The first terminal determines whether the time domain unit belongs to a resource pool based on a position of an uplink symbol included in the time domain unit and the first candidate starting position of the N candidate starting positions.

It should be understood that, for the unlicensed spectrum, the first terminal may select time domain resources and frequency domain resources in a pre-configured/network-configured resource pool to perform the sidelink channel transmission. In practical applications, uplink symbols in the time domain unit are available for the sidelink channel transmission, but the symbols of other types (such as downlink symbols, synchronization signals, or time domain symbols occupied by broadcast channels, etc.) are not available for the sidelink channel transmission.

Based on this, the first terminal may determine whether the time domain unit belongs to the resource pool, based on the position of the uplink symbol in the time domain unit and the first candidate starting position of the N candidate starting positions.

The first terminal may determine whether the time domain unit belongs to the resource pool based on the relationship between the position of the uplink symbol in the time domain unit and the location of the time domain symbols corresponding to each candidate starting position available for the sidelink channel transmission. The location of time domain symbols available for the sidelink channel transmission corresponding to each candidate starting position may be determined based on the first candidate starting position and the first number.

In an embodiment, if at least one time domain symbol of target time domain symbols in the time domain unit is not the uplink symbol, it is determined that the time domain unit does not belong to the resource pool. The target time domain symbols include X consecutive time domain symbols starting from a time domain symbol corresponding to the first candidate starting position of the N candidate starting positions, and X is an integer greater than 1.

The X is determined based on a first number, and the first number is the maximum number of time domain symbols in the time domain unit available for the sidelink channel transmission.

For example, if at least one of symbols Y, Y+1... Y+X-1 in a slot is not an uplink symbol, the slot is a slot not available for the sidelink channel transmission. Herein, the Y is determined based on the first candidate starting position of the N candidate starting positions, and the X is determined based on the first number indicated in the second configuration information.

In summary, the method for channel transmission is provided in the embodiments of the present disclosure. If the first terminal determines, based on the result of the channel access procedure, that the channel is available, the first terminal selects the target candidate starting position from N candidate starting positions in the time domain unit to perform sidelink channel transmission. The candidate starting position is used to represent the position of the starting time domain symbol in the time domain unit for the sidelink channel transmission. The target candidate starting position is the first candidate starting position after the moment when the first terminal determines, based on the result of the channel access procedure, that the channel is available. That is, the time domain unit may include multiple candidate starting positions, and after the moment when the first terminal determines that the channel is available, the first terminal may select the closest candidate starting position in the time domain to perform the sidelink channel transmission. In such way, after missing the starting position of the time domain unit, the terminal does not have to wait for the starting position of the next time domain unit, but selects the closest candidate starting position to start transmission after LBT is successful. The probability of accessing the channel and the efficiency of sidelink channel transmission can be improved.

Preferred implementations of the present disclosure have been described in detail as above with reference to the accompanying drawings. However, the present disclosure is not limited to the specific details in the above implementations. Within the scope of the technical concept of the present disclosure, various simple modifications may be made to the technical solutions of the present disclosure, and all these simple modifications belong to the scope of protection of the present disclosure. For example, various specific technical features described in the above specific implementations may be combined in any suitable manner without contradiction. In order to avoid unnecessary repetition, various possible combination manners will not be described any more in the present disclosure. For another example, various different implementations of the present disclosure may also be combined arbitrarily, as long as they do not depart from the idea of the present disclosure, which should also be considered as the contents disclosed in the present disclosure. For another example, provided that there is no conflict, the embodiments and/or technical features within the embodiments described in the present disclosure may be arbitrarily combined with related art. The technical solutions obtained after the combination should also fall into the scope of protection of the present disclosure.

It should further be understood that, in various method embodiments of the present disclosure, the size of the sequence numbers of the aforementioned processes does not imply the sequence of execution. The sequence of execution of the processes should be determined based on functions thereof and inherent logics, and should not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the "downlink" is used to represent that the transmission direction of the signal or data is a first direction transmitted from a station to a user equipment of a cell; the "uplink" is used to represent that the transmission direction of the signal or data is a second direction transmitted from the user equipment of the cell to the station; and the "sidelink" is used to represent that the transmission direction of the signal or data is a third direction transmitted from a user equipment 1 to a user equipment 2. For example, a "downlink signal" represents that the signal is transmitted in the first direction. In addition, in the embodiments of the present disclosure, the term "and/or" merely indicates an association relationship for describing associated objects, and represents that there are three kinds of relationships. Specifically, "A and/or B" may represent three situations, i.e., independent existence of A, existence of both A and B, and independent existence of B. Additionally, the character "/" herein generally represents that the previous and next objects form a kind of "or" relationship.

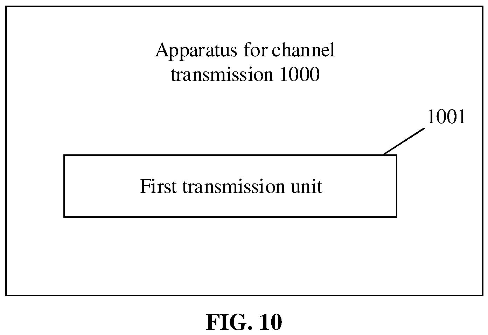

FIG. 10 is a schematic diagram of a compositional structure of an apparatus for channel transmission 1000 provided in an embodiment of the present disclosure, and the apparatus is applied to a terminal. As shown in FIG. 10, the apparatus for channel transmission 1000 includes a first transmission unit 1001.

The first transmission unit 1001 is configured to, when a sensing result for a channel is idle, select a target candidate starting position from N candidate starting positions in a time domain unit to perform sidelink channel transmission. A candidate starting position is used to represent a position of a starting time domain symbol in the time domain unit for the sidelink channel transmission.

The first transmission unit determines that the sensing result for the channel is idle before at least one candidate starting position of the N candidate starting positions. The target candidate starting position is a first candidate starting position of the at least one candidate starting position.

In an embodiment, the apparatus for channel transmission 1000 may further include a first reception unit. The first reception unit is configured to receive first configuration information. The first configuration information is used to configure the N candidate starting positions in the time domain unit.

In an embodiment, the first configuration information includes N index indication values, and the N index indication values are in one-to-one correspondence with N candidate starting positions. The N index indication values respectively indicate index values of time domain symbols corresponding to the N candidate starting positions in the time domain unit.

In an embodiment, the first configuration information includes first indication information, and the number of bits occupied by the first indication information is the same as the number of time domain symbols included in the time domain unit. Herein, values of N bits in the first indication information are a first value, and positions of the N bits in the first indication information are respectively used to indicate positions of time domain symbols corresponding to the N candidate starting positions in the time domain unit.

In an embodiment, the first configuration information may be carried through sidelink BWP configuration information and/or resource pool configuration information.

In an embodiment, the first configuration information includes first sub-configuration information and second sub-configuration information.

The first sub-configuration information is used to indicate the first candidate starting position of the N candidate starting positions.

The second sub-configuration information is used to indicate other N-1 candidate starting positions of the N candidate starting positions.

In an embodiment, the first sub-configuration information is carried through the sidelink BWP configuration information.

The second sub-configuration information is carried through the sidelink BWP configuration information or the resource pool configuration information.

In an embodiment, the first reception unit is further configured to acquire second configuration information. The second configuration information is used to configure at least one of:
a first number, which is used to determine the maximum number of time domain symbols in the time domain unit available for the sidelink channel transmission; or
a location of time domain symbols used for the sidelink channel transmission corresponding to each candidate starting position of the N candidate starting positions.

In an embodiment, in a case that the second configuration information is used to configure the first number, the location of the time domain symbols used for the sidelink channel transmission corresponding to the each candidate starting position of the N candidate starting positions is determined based on the first candidate starting position of the N candidate starting positions and the first number.

In an embodiment, the location of the time domain symbols used for the sidelink channel transmission corresponding to the each candidate starting position starts from the each candidate starting position and ends at a target position. The target position is determined based on the first candidate starting position of the N candidate starting positions and the first number.

In an embodiment, the number of time domain symbols used for the sidelink channel transmission corresponding to each candidate starting position of the N candidate starting positions is greater than or equal to a first threshold value.

In an embodiment, the apparatus for channel transmission 1000 may further include a deletion unit. The deletion unit is configured to, for a time domain unit including a physical sidelink feedback channel (PSFCH), if the number of time domain symbols used for a transmission of a physical sidelink shared channel (PSSCH) corresponding to the first candidate starting position is less than a second threshold value, delete the first candidate starting position from the N candidate starting positions corresponding to the time domain unit including the PSFCH.

The first candidate starting position is one of the N candidate starting positions.

In an embodiment, the first threshold value and/or the second threshold value is determined based on pre-definition in a protocol, pre-configuration information or network configuration information.

In an embodiment, the apparatus for channel transmission 1000 may further include a determination unit. The determination unit is configured to determine whether the time domain unit belongs to the resource pool based on a position of an uplink symbol included in the time domain unit and the first candidate starting position of the N candidate starting positions.

In an embodiment, the apparatus for channel transmission 1000 is further configured to, if at least one time domain symbol of target time domain symbols in the time domain unit is not the uplink symbol, determine that the time domain unit does not belong to the resource pool. The target time domain symbols include X consecutive time domain symbols starting from a time domain symbol corresponding to the first candidate starting position of the N candidate starting positions, and X is an integer greater than 1.

In an embodiment, the X is determined based on a first number, and the first number is the maximum number of time domain symbols in the time domain unit available for the sidelink channel transmission.

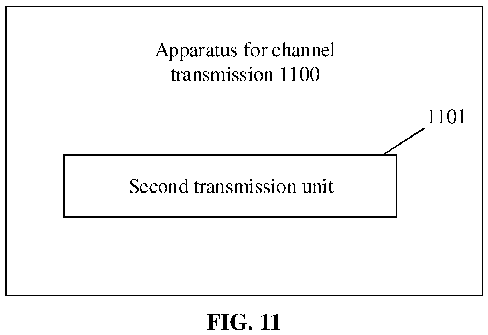

FIG. 11 is a schematic diagram of a compositional structure of an apparatus for channel transmission 1100 provided in an embodiment of the present disclosure, and the apparatus is applied to a network device. As shown in FIG. 11, the apparatus for channel transmission 1100 includes a second transmission unit 1101.

The second transmission unit 1101 is configured to transmit first configuration information. The first configuration information is used to configure N candidate starting positions in a time domain unit, and N is an integer greater than 1. A candidate starting position is used to represent a position of a starting time domain symbol in the time domain unit for the sidelink channel transmission.

In an embodiment, the first configuration information includes N index indication values, and the N index indication values are in one-to-one correspondence with the N candidate starting positions.

The N index indication values respectively indicate index values of time domain symbols corresponding to the N candidate starting positions in the time domain unit.

In an embodiment, the first configuration information includes first indication information, and the number of bits occupied by the first indication information is the same as the number of time domain symbols included in the time domain unit.

Herein, values of N bits in the first indication information are a first value, and positions of the N bits in the first indication information are respectively used to indicate positions of time domain symbols corresponding to the N candidate starting positions in the time domain unit.

In an embodiment, the first configuration information may be carried through the sidelink bandwidth part (BWP) configuration information and/or resource pool configuration information.

In an embodiment, the first configuration information includes first sub-configuration information and second sub-configuration information.

The first sub-configuration information is used to indicate the first candidate starting position of the N candidate starting positions.

The second sub-configuration information is used to indicate other N-1 candidate starting positions of the N candidate starting positions.

In an embodiment, the first sub-configuration information is carried through sidelink BWP configuration information.

The second sub-configuration information is carried through the sidelink BWP configuration information or the resource pool configuration information.

In an embodiment, the second transmission unit is further configured to transmit second configuration information to a first terminal. The second configuration information is used to configure at least one of:
a first number, which is used to determine the maximum number of time domain symbols in the time domain unit available for the sidelink channel transmission; or
a location of time domain symbols used for the sidelink channel transmission corresponding to each candidate starting position of the N candidate starting positions.

In an embodiment, in a case that the second configuration information is used to configure the first number, the location of the time domain symbols used for the sidelink channel transmission corresponding to the each candidate starting position of the N candidate starting positions is determined based on the first candidate starting position of the N candidate starting positions and the first number.

In an embodiment, the location of the time domain symbols used for the sidelink channel transmission corresponding to the each candidate starting position starts from the each candidate starting position and ends at a target position. The target position is determined based on the first candidate starting position of the N candidate starting positions and the first number.

In an embodiment, the number of time domain symbols used for the sidelink channel transmission corresponding to each candidate starting position of the N candidate starting positions is greater than or equal to a first threshold value.

It should be understood by those skilled in the art that the related description of the aforementioned apparatus for channel transmission (including the apparatus for channel transmission 1000 and the apparatus for channel transmission 1100) in the embodiments of the present disclosure may be understood with reference to the related description of the method for channel transmission in the embodiments of the present disclosure.

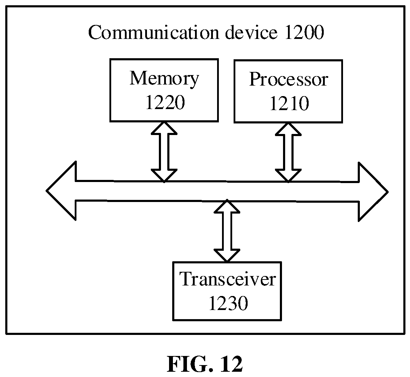

FIG. 12 is a schematic structural diagram of a communication device 1200 according to an embodiment of the present disclosure. The communication device may be a terminal device or a network device. The communication device 1200 shown in FIG. 12 includes a processor 1210 that may call and execute a computer program from a memory to implement each of the methods in the embodiments of the present disclosure.

In an embodiment, as shown in FIG. 12, the communication device 1200 may further include a memory 1220. Herein, the processor 1210 may call and execute the computer program from the memory 1220 to implement each of the methods in the embodiments of the present disclosure.

The memory 1220 may be a separate device independent of the processor 1210, or may be integrated in the processor 1210.

In an embodiment, as shown in FIG. 12, the communication device 1200 may further include a transceiver 1230, and the processor 1210 may control the transceiver 1230 to communicate with other devices. Specifically, the transceiver 1230 may transmit information or data to other devices, or receive information or data from other devices.

Herein, the transceiver 1230 may include a transmitter and a receiver. The transceiver 1230 may further include one or more antennas.

In an embodiment, the communication device 1200 may specifically be the network device in the embodiments of the present disclosure, and the communication device 1200 may implement corresponding processes implemented by the network device in each of the methods in the embodiments of the present disclosure. For brevity, details will not be repeated herein again.

In an embodiment, the communication device 1200 may specifically be the first terminal/the terminal device in the embodiments of the present disclosure, and the communication device 1200 may implement corresponding processes implemented by the first terminal/the terminal device in each of the methods in the embodiments of the present disclosure. For brevity, details will not be repeated herein again.

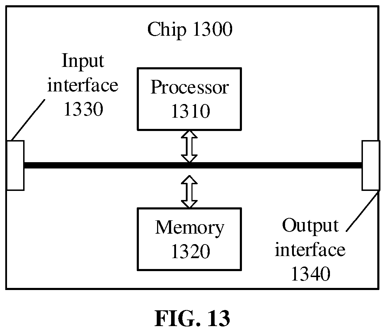

FIG. 13 is a schematic structural diagram of a chip in an embodiment of the present disclosure. The chip 1300 shown in FIG. 13 includes a processor 1310 that may call and execute a computer program from a memory to implement each of the methods in the embodiments of the present disclosure.

In an embodiment, as shown in FIG. 13, the chip 1300 may further include a memory 1320. Herein, the processor 1310 may call and execute the computer program from the memory 1320 to implement each of the methods in the embodiments of the present disclosure.

Herein, the memory 1320 may be a separate device independent of the processor 1310, or may be integrated in the processor 1310.

In an embodiment, the chip 1300 may further include an input interface 1330. Herein, the processor 1310 may control the input interface 1330 to communicate with other devices or chips. Specifically, the input interface 830 may acquire information or data from other devices or chips.

In an embodiment, the chip 1300 may further include an output interface 1340. Herein, the processor 1310 may control the output interface 1340 to communicate with other devices or chips. Specifically, the output interface 840 may output information or data to other devices or chips.

In an embodiment, the chip may be applied to the network device in the embodiments of the present disclosure, and the chip may implement corresponding processes implemented by the network device in each method of the embodiments of the present disclosure. For brevity, details will not be repeated herein again.

In an embodiment, the chip may be applied to the first terminal/the terminal device in the embodiments of the present disclosure, and the chip may implement corresponding processes implemented by the first terminal/the terminal device in each method of the embodiments of the present disclosure. For brevity, details will not be repeated herein again.

It should be understood that the chip mentioned in the embodiments of the present disclosure may also be referred to as a system-level chip, a system chip, a chip system, or a system-on-chip, etc.

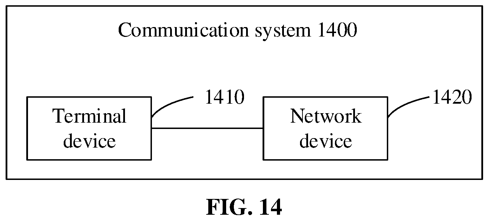

FIG. 14 is a schematic block diagram of a communication system 1400 according to an embodiment of the present disclosure. As shown in FIG. 14, the communication system 1400 includes a terminal device 1410 and a network device 1420.

Herein, the terminal device 1410 may be configured to implement the corresponding functions implemented by the first terminal/the terminal device in the foregoing method, and the network device 1420 may be configured to implement the corresponding functions implemented by the network device in the foregoing method. For brevity, details will not be repeated herein again.

It should be understood that the processor in the embodiments of the present disclosure may be an integrated circuit chip with a signal processing capability. In an implementation process, various operations of the aforementioned method embodiments may be completed by an integrated logic circuit of hardware or the instructions in the form of software in the processor. The processor described above may be a general-purpose processor, a Digital Signal Processor (DSP), an Application Specific Integrated Circuit (ASIC), a Field Programmable Gate Array (FPGA) or another programmable logic device, discrete gate or transistor logic device, or discrete hardware component. Various methods, operations and logic block diagrams disclosed in the embodiments of the present disclosure may be implemented or performed. The general-purpose processor may be a microprocessor, or may be any conventional processor or the like. The operations of the methods disclosed combined with the embodiments of the present disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), or an electrically erasable programmable memory, a register, etc. The storage medium is located in the memory, and the processor reads information in the memory and completes the operations of the foregoing method in combination with hardware.

It is understood that, in the embodiment of the present disclosure, the memory may be a volatile memory or a non-volatile memory, or may include both the volatile memory and the non-volatile memory. The non-volatile memory may be a ROM, a PROM, an Erasable PROM (EPROM), an Electrically EPROM (EEPROM), or a flash memory. The volatile memory may be a RAM, which serves as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory of the systems and methods described herein is intended to include, but not limited to, memories of these and any other suitable types.

It should be understood that the aforementioned memory is described only exemplarily rather than limitedly. For example, the memory in the embodiments of the present disclosure may further be a SRAM, a DRAM, a SDRAM, a DDR SDRAM, an ESDRAM, a SLDRAM and a DR RAM, etc. That is, the memory in the embodiments of the present disclosure is intended to include, but not limited to, memories of these and any other suitable types.

In the embodiments of the present disclosure, a computer-readable storage medium having stored thereon a computer program is further provided.

In an embodiment, the computer-readable storage medium may be applied to the network device in the embodiments of the present disclosure, and the computer program is executed to enable a computer to execute corresponding processes implemented by the network device in each of the methods in the embodiments of the present disclosure. For brevity, details will not be repeated herein again.

In an embodiment, the computer-readable storage medium may be applied to the terminal/the terminal device in the embodiments of the present disclosure, and the computer program is executed to enable the computer to execute corresponding processes implemented by the terminal/the terminal device in each of the methods in the embodiments of the present disclosure. For brevity, details will not be repeated herein again.

In the embodiment of the present disclosure, a computer program product having stored therein computer program instructions is further provided.

In an embodiment, the computer program product may be applied to the network device in the embodiments of the present disclosure, and the computer program instructions cause the computer to execute corresponding processes implemented by the network device in each of the methods in the embodiments of the present disclosure. For brevity, details will not be repeated herein again.

In an embodiment, the computer program product may be applied to the terminal/the terminal device in the embodiments of the present disclosure, and the computer program instructions cause the computer to execute corresponding processes implemented by the terminal/the terminal device in each of methods in the embodiments of the present disclosure. For brevity, details will not be repeated herein again.

In the embodiment of the present disclosure, a computer program is further provided.

In an embodiment, the computer program may be applied to the network device in the embodiments of the present disclosure. The computer program that, when executed by a computer, causes the computer to execute corresponding processes implemented by the network device in each of methods in the embodiments of the present disclosure. For brevity, details will not be repeated herein again.

In an embodiment, the computer program may be applied to the terminal/the terminal device in the embodiments of the present disclosure. The computer program that, when executed by a computer, causes the computer to execute corresponding processes implemented by the terminal/the terminal device in each of methods in the embodiments of the present disclosure. For brevity, details will not be repeated herein again.

Those of ordinary skilled in the art may appreciate that the units and algorithmic operations of each of the examples described in combination with the embodiments disclosed herein may be implemented in electronic hardware, or a combination of computer software and electronic hardware. Whether these functions are performed in hardware or software depends on the specific application and design constraints of the technical solutions. The professionals may use different methods to implement the described functions for each specific application, and such implementations shall not be considered beyond the scope of the present disclosure.

Those skilled in the art may clearly understand that, for the specific working processes of the systems, devices, and units described above, reference may be made to the corresponding processes in the aforementioned method embodiments, which will not be repeated herein for convenience and conciseness of the description.

In several embodiments provided in the present disclosure, it should be understood that the disclosed systems, devices, and methods may be implemented in other ways. For example, the device embodiments described above are only schematic. For example, the partition of the unit is only a kind of logical functional partition, and other division manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection, implemented through some interfaces, of the devices or units, and may be electrical, mechanical or in other forms.

The units described as separate components may or may not be physically separate, and the components displayed as units may or may not be physical units, that is, may be located in one place or be distributed to multiple network units. Part or all of the units may be selected based on the actual needs to achieve the purpose of the solution of the embodiments.

Moreover, various functional units in the embodiments of the present disclosure may be integrated into one processing unit, or they may be physically exist separately as individual units, or two or more units may be integrated into one unit.

The functions may be stored in a computer readable storage medium if implemented in the form of software functional units and sold or used as a stand-alone product. Based on such understanding, the essential part of the technical solutions of the present disclosure or a part of the technical solutions that contributes to the related art or the part of the technical solutions may be embodied in a form of a software product. The software product is stored in a storage medium and includes instructions which cause a computer device (which may be a personal computer, a server, or a network device, etc.) to execute all or part of the operations in the methods described in various embodiments of the present disclosure. The foregoing storage medium includes various media capable of storing program codes, such as a USB disk, a mobile hard disk, a ROM, a RAM, a magnetic disk, an optical disk, or the like.

The foregoing are only the specific implementations of the present disclosure; however, the scope of protection of the present disclosure is not limited thereto. Variations or replacement which can be readily thought by those skilled in the art within the technical scope disclosed in the present disclosure shall fall within the scope of protection of the present disclosure. Therefore, the scope of protection of the present disclosure shall be subject to the scope of protection of the claims.

## Claims

1. A method for channel transmission, comprising:
if a first terminal determines, based on a result of a channel access procedure, that a channel is available, selecting, by the first terminal, a target candidate starting position from N candidate starting positions in a time domain unit to perform sidelink channel transmission; wherein a candidate starting position is used to represent a position of a starting time domain symbol in the time domain unit for the sidelink channel transmission, and N is an integer greater than 1; and
wherein the target candidate starting position is a first candidate starting position after a moment when the first terminal determines, based on the result of the channel access procedure, that the channel is available.

2. The method of claim 1, wherein before selecting, by the first terminal, the target candidate starting position from the N candidate starting positions in the time domain unit to perform the sidelink channel transmission, the method further comprises:
receiving, by the first terminal, first configuration information, the first configuration information being used to configure the N candidate starting positions in the time domain unit.

3. The method of claim 2, wherein the first configuration information comprises N index indication values, and the N index indication values are in one-to-one correspondence with the N candidate starting positions; and
wherein the N index indication values respectively indicate index values of time domain symbols corresponding to the N candidate starting positions in the time domain unit.

4. The method of claim 2, wherein the first configuration information comprises first indication information, and a number of bits occupied by the first indication information is the same as a number of time domain symbols comprised in the time domain unit; and
wherein values of N bits in the first indication information are a first value, and positions of the N bits in the first indication information are respectively used to indicate positions of time domain symbols corresponding to the N candidate starting positions in the time domain unit.

5. The method of any one of claims 2 to 4, wherein the first configuration information is carried through sidelink bandwidth part (BWP) configuration information and/or resource pool configuration information.

6. The method of any one of claims 2 to 5, wherein the first configuration information comprises first sub-configuration information and second sub-configuration information;
wherein the first sub-configuration information is used to indicate the first candidate starting position of the N candidate starting positions, and the first candidate starting position is one of the N candidate starting positions; and
wherein the second sub-configuration information is used to indicate other N-1 candidate starting positions of the N candidate starting positions.

7. The method of claim 6, wherein
the first sub-configuration information is carried through sidelink bandwidth part (BWP) configuration information; and
the second sub-configuration information is carried through the sidelink BWP configuration information or resource pool configuration information.

8. The method of any one of claims 1 to 7, further comprising: acquiring, by the first terminal, second configuration information, the second configuration information being used to configure at least one of:
a first number, which is used to determine a maximum number of time domain symbols in the time domain unit available for the sidelink channel transmission; or
a location of time domain symbols used for the sidelink channel transmission corresponding to each candidate starting position of the N candidate starting positions.

9. The method of claim 8, wherein in a case that the second configuration information is used to configure the first number, the location of the time domain symbols used for the sidelink channel transmission corresponding to each candidate starting position of the N candidate starting positions is determined based on the first candidate starting position of the N candidate starting positions and the first number.

10. The method of claim 9, wherein
the location of the time domain symbols used for the sidelink channel transmission corresponding to the each candidate starting position starts from the each candidate starting position and ends at a target position, and the target position is determined based on the first candidate starting position of the N candidate starting positions and the first number.

11. The method of any one of claims 1 to 10, wherein
a number of time domain symbols used for the sidelink channel transmission corresponding to each candidate starting position of the N candidate starting positions is greater than or equal to a first threshold value.

12. The method of any one of claims 1 to 11, further comprising:
for a time domain unit comprising a physical sidelink feedback channel (PSFCH), if a number of time domain symbols used for a transmission of a physical sidelink shared channel (PSSCH) corresponding to the first candidate starting position is less than a second threshold value, deleting the first candidate starting position from the N candidate starting positions corresponding to the time domain unit comprising the PSFCH;
wherein the first candidate starting position is one of the N candidate starting positions.

13. The method of claim 11 or 12, wherein the first threshold value and/or the second threshold value is determined based on pre-definition in a protocol, pre-configuration information or network configuration information.

14. The method of any one of claims 1 to 13, further comprising:
determining, by the first terminal, whether the time domain unit belongs to a resource pool based on a position of an uplink symbol comprised in the time domain unit and the first candidate starting position of the N candidate starting positions.

15. The method of claim 14, further comprising:
if at least one time domain symbol of target time domain symbols in the time domain unit is not the uplink symbol, determining that the time domain unit does not belong to the resource pool; wherein the target time domain symbols comprise X consecutive time domain symbols starting from a time domain symbol corresponding to the first candidate starting position of the N candidate starting positions, and X is an integer greater than 1.

16. The method of claim 15, wherein the X is determined based on a first number, and the first number is a maximum number of time domain symbols in the time domain unit available for the sidelink channel transmission.

17. A method for channel transmission, comprising:
transmitting, by a network device, first configuration information, the first configuration information being used to configure N candidate starting positions in a time domain unit, N being an integer greater than 1; wherein a candidate starting position is used to represent a position of a starting time domain symbol in the time domain unit for the sidelink channel transmission.

18. The method of claim 17, wherein the first configuration information comprises N index indication values, and the N index indication values are in one-to-one correspondence with the N candidate starting positions; and
wherein the N index indication values respectively indicate index values of time domain symbols corresponding to the N candidate starting positions in the time domain unit.

19. The method of claim 17, wherein the first configuration information comprises first indication information, and a number of bits occupied by the first indication information is the same as a number of time domain symbols comprised in the time domain unit; and
wherein values of N bits in the first indication information are a first value, and positions of the N bits in the first indication information are respectively used to indicate positions of time domain symbols corresponding to the N candidate starting positions in the time domain unit.

20. The method of any one of claims 17 to 19, wherein the first configuration information is carried through sidelink bandwidth part (BWP) configuration information and/or resource pool configuration information.

21. The method of any one of claims 17 to 19, wherein the first configuration information comprises first sub-configuration information and second sub-configuration information;
wherein the first sub-configuration information is used to indicate the first candidate starting position of the N candidate starting positions; and
wherein the second sub-configuration information is used to indicate other N-1 candidate starting positions of the N candidate starting positions.

22. The method of claim 21, wherein
the first sub-configuration information is carried through sidelink bandwidth part (BWP) configuration information; and
the second sub-configuration information is carried through the sidelink BWP configuration information or resource pool configuration information.

23. The method of any one of claims 17 to 22, further comprising: transmitting, by the network device, second configuration information to a first terminal, the second configuration information being used to configure at least one of:
a first number, which is used to determine a maximum number of time domain symbols in the time domain unit available for the sidelink channel transmission; or
a location of time domain symbols used for the sidelink channel transmission corresponding to each candidate starting position of the N candidate starting positions.

24. The method of claim 23, wherein in a case that the second configuration information is used to configure the first number, the location of the time domain symbols used for the sidelink channel transmission corresponding to the each candidate starting position of the N candidate starting positions is determined based on the first candidate starting position of the N candidate starting positions and the first number.

25. The method of claim 24, wherein the location of the time domain symbols used for the sidelink channel transmission corresponding to the each candidate starting position starts from the each candidate starting position and ends at a target position, and the target position is determined based on the first candidate starting position of the N candidate starting positions and the first number.

26. The method of any one of claims 17 to 25, wherein a number of time domain symbols used for the sidelink channel transmission corresponding to each candidate starting position of the N candidate starting positions is greater than or equal to a first threshold value.

27. An apparatus for channel transmission, applied to a terminal, the apparatus comprising:
a first transmission unit, configured to, when a sensing result for a channel is idle, select a target candidate starting position from N candidate starting positions in a time domain unit to perform sidelink channel transmission; wherein a candidate starting position is used to represent a position of a starting time domain symbol in the time domain unit for the sidelink channel transmission; and
wherein the first transmission unit determines that the sensing result for the channel is idle before at least one candidate starting position of the N candidate starting positions, and the target candidate starting position is a first candidate starting position of the at least one candidate starting position.

28. An apparatus for channel transmission, applied to a network device, the apparatus comprising:
a second transmission unit, configured to transmit first configuration information, the first configuration information being used to configure N candidate starting positions in a time domain unit, N being an integer greater than 1; wherein a candidate starting position is used to represent a position of a starting time domain symbol in the time domain unit for the sidelink channel transmission.

29. A terminal comprising: a memory and a processor,
the memory stores a computer program executable on the processor,
the processor, when executing the program, implements the method of any one of claims 1 to 16.

30. A network device comprising: a memory and a processor,
the memory stores a computer program executable on the processor,
the processor, when executing the program, implements the method of any one of claims 17 to 26.

31. A computer storage medium storing one or more program that, when executed by one or more processor, cause the one or more processor implement the method of any one of claims 1 to 16.

32. A computer storage medium storing one or more program that, when executed by one or more processor, cause the one or more processor implement the method of any one of claims 17 to 26.

33. A chip comprising: a processor for invoking and executing a computer program from a memory such that an apparatus on which the chip is mounted implements the method of any one of claims 1 to 16.

34. A chip comprising: a processor for invoking and executing a computer program from a memory such that an apparatus on which the chip is mounted implements the method of any one of claims 17 to 26.

35. A computer program product comprising a computer storage medium storing a computer program, the computer program comprises instructions executable by at least one processor that, when executed by the at least one processor, implement the method of any one of claims 1 to 16.

36. A computer program product comprising a computer storage medium storing a computer program, the computer program comprises instructions executable by at least one processor that, when executed by the at least one processor, implement the method of any one of claims 17 to 26.

37. A computer program that, when executed by a computer, causes the computer to implement the method of any one of claims 1 to 16.

38. A computer program that, when executed by a computer, causes the computer to implement the method of any one of claims 17 to 26.
